# EUROPEAN PATENT APPLICATION

(11) **EP 3 988 603 A1**
(43) Date of publication of application: **27.04.2022**
(21) Application number: 20826153.7
(22) Date of filing: 09.06.2020
(51) Int. Cl.: C08J 5/04

(54) **UNIDIRECTIONAL FIBER-REINFORCED RESIN SHEET, AND LAYERED BODY AND AUTOMOBILE MEMBER INCLUDING SAME**

(30) Priority: 18.06.2019 JP 2019112457
(71) Applicant: Mitsui Chemicals, Inc., Tokyo 105-7122 (JP)
(72) Inventor: HIRANO, Taiki, Sodegaura-shi, Chiba 299-0265 (JP); ISAKI, Takeharu, Sodegaura-shi, Chiba 299-0265 (JP); MIYATA, Atsushi, Sodegaura-shi, Chiba 299-0265 (JP)
(74) Representative: Hoffmann Eitle
(86) International application number: PCT/JP2020/022613
(87) International publication number: WO 2020/255786

(57) **Abstract**

Disclosed are: a unidirectional fiber-reinforced resin sheet which has excellent vibration fatigue characteristics and which includes long carbon fibers (L) which have a fiber length of 20 mm or greater and which are oriented in one direction, a thermoplastic resin (e.g., an unmodified propylene resin (P1) and a modified propylene resin (P2)), and a filler (S) (e.g., short carbon fibers or short glass fibers) having an aspect ratio of 5.0-500; a layered body including a plurality of the unidirectional fiber-reinforced resin sheet; and an automobile member including the unidirectional fiber-reinforced resin sheet.

## Description

### Technical Field

The present invention relates to a unidirectional fiber reinforced resin sheet having excellent vibration fatigue properties, a laminate including the sheets, and a member for an automobile (hereinafter also referred to as "automobile member") including the sheet.

### Background Art

Conventionally, as a fiber reinforced resin containing reinforcing fibers, for example, a unidirectional fiber reinforced resin sheet is known. The unidirectional fiber reinforced resin sheet includes a fiber bundle (a bundle composed of a plurality of fibers) aligned in one direction and impregnated with a resin. Such a unidirectional fiber reinforced resin sheet is lighter than a sheet-shaped metal and has higher mechanical strength than a sheet made entirely of resin. This unidirectional fiber reinforced resin sheet thus may be used, for example, for the purpose of partially reinforcing a molded product of a resin to improve the strength thereof. Such a resin molded product reinforced in this way is useful as a substitute for, for example, a metal member.

Patent Literature (hereinafter abbreviated as "PTL") 1 discloses a unidirectional fiber reinforced resin sheet containing an acid-modified polypropylene and a polypropylene that is not acid-modified as the matrix resin thereof. PTL 1 also teaches that this sheet may contain an inorganic filler as an optional component.

### Citation List

### Patent Literature

PTL 1 Japanese Patent Application Laid-Open No. 2018-154773

### Summary of Invention

### Technical Problem

The present inventors have found that conventional unidirectional fiber reinforced resin sheets may require improvement in mechanical strength properties (in particular, vibration fatigue properties).

For example, PTL 1 describes the use of the unidirectional fiber reinforced resin sheet for stamping molding, but does not describe the use of the sheet as it is as a reinforcing material. Examples of applications in which such a sheet is used as it is as a reinforcing material include components of vehicles and aircraft, where weight reduction and strength are required. As vehicles and aircraft generate vibrations during their operation, the sheets are also required to have excellent vibration fatigue properties.

An object of the present invention is to provide a unidirectional fiber reinforced resin sheet having excellent vibration fatigue properties, a laminate including the sheets, and an automobile member including the sheet.

### Solution to Problem

In order to improve the vibration fatigue properties of unidirectional fiber reinforced resin sheets, the present inventors first have added common fillers such as talc, which has a relatively small aspect ratio. The addition of the common fillers slightly improved the vibration fatigue properties, but not to a sufficient level. Then the present inventors have added a filler with a relatively large aspect ratio (a filler with an aspect ratio within a specific range), resulting in the significantly improved vibration fatigue properties, thereby completing the present invention. The present invention is specified by the following matters.

[1] A unidirectional fiber reinforced resin sheet, containing a long carbon fiber (L), which is oriented in one direction and has a fiber length of 20 mm or more; a thermoplastic resin; and a filler (S) having an aspect ratio of 5.0 to 500.

[2] The unidirectional fiber reinforced resin sheet according to [1], in which the filler (S) has a length of 0.01 to 10 mm.

[3] The unidirectional fiber reinforced resin sheet according to [1], in which the filler (S) is at least one type of fiber selected from the group consisting of short carbon fibers and short glass fibers.

[4] The unidirectional fiber reinforced resin sheet according to [1], in which the content of the filler (S) is 0.1 to 40.0 mass% in the total mass of 100 mass% of the unidirectional fiber reinforced resin sheet.

[5] The unidirectional fiber reinforced resin sheet according to [1], in which the thermoplastic resin includes an unmodified propylene-based resin (herein, also referred to as "propylene resin") (P1) having a melt flow rate of 100 g/10 min or more measured at 230°C and a load of 2.16 kg according to ASTM D1238.

[6] The unidirectional fiber reinforced resin sheet according to [1], in which the thermoplastic resin includes a modified propylene resin (P2) having at least a carboxylate bonded to a polymer chain of the modified propylene resin (P2).

[7] The unidirectional fiber reinforced resin sheet according to [1], in which the thermoplastic resin includes a polyamide-based resin (herein, also referred to as "polyamide resin") having a melt flow rate of 40 g/10 min or more measured at 230°C and a load of 2.16 kg according to ASTM D1238 after drying at 80°C for 5 hours.

[8] A laminate including a plurality of the unidirectional fiber reinforced resin sheets according to [1].

[9] A member for an automobile, the member including the unidirectional fiber reinforced resin sheet according to [1].

### Advantageous Effects of Invention

The present invention can provide a unidirectional fiber reinforced resin sheet having excellent vibration fatigue properties, a laminate including the sheets, and an automobile member including the sheet.

In general, the vibration fatigue properties largely depend on the material on the surface of a sheet, and usually, the surface of a conventional unidirectional fiber reinforced resin sheet is mostly covered by a matrix resin. Therefore, the vibration fatigue properties of the conventional sheet largely depend on the strength of the matrix resin. In the present invention, meanwhile, as the matrix resin contains a filler (S), the strength on the surface is increased, thereby improving the vibration fatigue properties of the matrix resin.

A filler (S) having an aspect ratio within a specific range is used in the present invention, resulting in the significantly improved vibration fatigue properties as compared with the case where a filler having a small aspect ratio is used. Though not clear, the reason can be deduced as follows. A filler having a large aspect ratio tends to be oriented along the same direction as the fiber of the long carbon fiber (L), and as a result, the area occupied by the filler on the surface of the sheet becomes larger than the area that would be occupied by a filler having a small aspect ratio. The filler having a large aspect ratio thus has a notably high strength-enhancing effect.

### Description of Embodiments

Herein, the numerical range represented by the term "to" means a range including the numerical values before and after the term "to" as the lower and upper limit values.

In numerical ranges described stepwise herein, the upper or lower limit value described in a certain numerical range may be replaced with the upper or lower limit value of another numerical range in the ranges described stepwise. Further, in the numerical ranges described herein, the upper or lower limit value described in a certain numerical range may be replaced with any value shown in the Examples.

### Long Carbon Fiber (L)

The long carbon fiber (L) used in the present invention is a carbon fiber having a fiber length of 20 mm or more. The upper limit of the fiber length may be any value within the range in accordance with the size required in the application where the unidirectional fiber reinforced resin sheet is used. In addition, the aspect ratio of the long carbon fiber (L) is typically more than 500.

The average fiber diameter of the long carbon fibers (L) may be any value, but is preferably 1 to 20 µm, more preferably 3 to 15 µm from the viewpoint of the mechanical properties and surface appearance of the obtained molded product.

Any type of long carbon fiber (L) may be used, and various types of known carbon fiber can be used. In particular, PAN-based, pitch-based or rayon-based long carbon fibers are preferred from the viewpoint of improving mechanical properties and reducing the weight of the molded product. PAN-based carbon fibers are more preferred from the viewpoint of balancing the strength and elastic modulus of the obtained molded product.

The surface oxygen concentration ratio [O/C], which is the ratio between the numbers of atoms of oxygen (O) and carbon (C) on the surface of the carbon fiber measured by X-ray photoelectron spectroscopy, is preferably 0.05 to 0.5, more preferably 0.08 to 0.4, and particularly preferably 0.1 to 0.3. A surface oxygen concentration ratio of 0.05 or more allows for a sufficient amount of functional groups on the surface of the carbon fiber, thereby obtaining increased adhesion to the thermoplastic resin. The upper limit of the surface oxygen concentration ratio may be any value, but 0.5 or less is generally preferred from the viewpoint of balancing handling of the carbon fiber and the productivity. The surface oxygen concentration ratio [O/C] of carbon fiber can be measured by the method described in WO2017/183672. Any method may be used for controlling the surface oxygen concentration ratio [O/C] of the carbon fiber. For example, methods such as electrolytic oxidation treatment, chemical solution oxidation treatment, and gas phase oxidation treatment can be used. In particular, the electrolytic oxidation treatment is preferred.

The long carbon fiber (L) is preferably obtained by opening (spreading) a carbon fiber bundle in which a plurality of carbon fibers are bundled with a sizing agent (binder). The number of single threads of the carbon fiber bundle is not limited. The number is typically 100 to 350,000, preferably 1,000 to 250,000, and more preferably 5,000 to 220,000. The sizing agent that bundles the carbon fibers is, for example, an olefin emulsion, a urethane emulsion, an epoxy emulsion, or a nylon emulsion, preferably an olefin emulsion, and more preferably a propylene emulsion. In particular, a propylene emulsion containing an unmodified propylene resin and a modified propylene resin is preferred from the viewpoint of improving the adhesiveness between the reinforced fiber bundle and the matrix resin. As the unmodified propylene resin and the modified propylene resin used in the sizing agent, the resins the same as an unmodified propylene resin (P1) and a modified propylene resin (P2) used in a matrix resin (M) described below are suitably used.

### Thermoplastic Resin

The thermoplastic resin used in the present invention is mainly a matrix resin (M) of a unidirectional fiber reinforced resin sheet.

Specific examples of the thermoplastic resin include polycarbonate resin, styrene resin, polyamide resin, polyester resin, polyphenylene sulfide resin (PPS resin), modified polyphenylene ether resin (modified PPE resin), polyacetal resin (POM resin), liquid crystal polyester, polyarylate, an acrylic resin such as polymethylmethacrylate resin (PMMA), vinyl chloride, polyimide (PI), polyamideimide (PAI), polyetherimide (PEI), polysulfone, polyethersulfone, polyketone, polyetherketone, polyetheretherketone (PEEK), polyolefins such as polyethylene and polypropylene, modified polyolefin, phenol resin, and phenoxy resin. These resins may be used in combination. In particular, a polyamide resin and/or a polyester resin iare preferred as the resin having polarity, and a polyolefin resin is preferable as the resin having low polarity. From the viewpoint of cost and weight reduction of the molded product, the thermoplastic resin preferably includes a propylene resin and/or a polyamide resin.

The type of the propylene resin is not limited, and either a propylene homopolymer or a propylene-based copolymer may be used, and further, the polymers may be used in combination. The stereoregularity of the polymer may be isotactic, syndiotactic, or atactic. In particular, isotactic or syndiotactic is preferred.

The propylene resin may be either an unmodified propylene resin (P1) or a modified propylene resin (P2) that has at least a carboxylate bonded to the polymer chain thereof. The unmodified propylene resin (P1) and the modified propylene resin (P2) may be used in combination. In particular, both the unmodified propylene resin (P1) and the modified propylene resin (P2) are preferably contained. The mass ratio [(P1)/(P2)] between the propylene resins is preferably 99.9/0.1 to 80/20, more preferably 99.5/0.5 to 85/15, and particularly preferably 99/1 to 90/10.

The melt flow rate (MFR) of the unmodified propylene resin (PI), measured at 230°C and a load of 2.16 kg according to ASTM D1238, is preferably 100 g/10 min or more, and more preferably 130 to 500 g/10 min. A value of the MFR within this range does not excessively lower the fluidity upon addition of the filler (S) described below, and allows the matrix resin (M) to sufficiently impregnate the long carbon fiber (L).

The weight average molecular weight (Mw) of the unmodified propylene resin (P1) is preferably 50,000 to 300,000, more preferably 50,000 to 200,000.

The unmodified propylene resin (P1) is a resin having a structural unit derived from propylene. The amount of the structural unit derived from propylene is preferably 50 mol% or more. The unmodified propylene resin (P1) may also be a copolymer having a structural unit derived from at least one olefin (excluding propylene) or polyene selected from the group consisting of α-olefins, conjugated dienes, and non-conjugated dienes, in addition to the structural unit derived from propylene.

Specific examples of the α-olefin-the copolymer component when the unmodified propylene resin (P1) is a copolymer-include α-olefins (excluding propylene) having 2 to 20 carbon atoms, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. In particular, 1-butene, ethylene, 4-methyl-1-pentene, and 1-hexene are preferred, and 1-butene and 4-methyl-1-pentene are more preferred. Specific examples of the conjugated diene and non-conjugated diene-the copolymer component-include butadiene, ethylidene norbornene, dicyclopentadiene, and 1,5-hexadiene. The above α-olefins, conjugated dienes, and non-conjugated dienes may be used in combination.

The modified propylene resin (P2) is a propylene resin having at least a carboxylate bonded to the polymer chain thereof. The carboxylate of the modified propylene resin (P2) has an effect of increasing the interfacial adhesive strength between the long carbon fiber (L) and the matrix resin (M).

Among the materials for the modified propylene resin (P2), examples of a propylene polymer include propylene homopolymer; and copolymers of propylene and at least one α-olefin, such as ethylene/propylene copolymer, propylene/1-butene copolymer, and ethylene/propylene/1-butene copolymer. Among the materials, examples of a monomer having a carboxylic acid structure include monomers having a neutralized or non-neutralized carboxylic acid group and monomers having a saponified or non-saponified carboxylic acid ester. Radical graft polymerization of the propylene polymer with the monomer having a carboxylic acid structure is a typical method to produce the modified propylene resin (P2). Specific examples of the olefins used in the propylene polymer are the same as those used in the unmodified propylene resin (P1).

It may be possible to obtain the modified propylene resin (P2) by direct polymerization of propylene with a monomer having a carboxylic acid ester with the use of a special catalyst. It may also be possible to obtain a polymer-if the polymer contains a large amount of ethylene-by high-pressure radical polymerization of ethylene and propylene with a monomer having a carboxylic acid structure.

Examples of the monomer having a carboxylic acid group that is neutralized or non-neutralized and the monomer having a carboxylic acid ester that is saponified or non-saponified include ethylene-based unsaturated carboxylic acids, anhydrides thereof, and esters thereof; and compounds having unsaturated vinyl groups other than olefins.

Specific examples of the ethylene-based unsaturated carboxylic acid include (meth)acrylic acid, maleic acid, fumaric acid, tetrahydrophthalic acid, itaconic acid, citraconic acid, crotonic acid, and isocrotonic acid. Specific examples of the anhydride include nadic acid (trademark (endosis-bicyclo[2.2.1] hept-5-ene-2,3-dicarboxylic acid)), maleic anhydride, and citraconic anhydride.

Specific examples of the compounds having unsaturated vinyl groups other than olefins include the followings: (meth)acrylic acid esters such as methyl (meth)acrylate, ethyl (meth)acrylate, propyl (meth)acrylate, n-butyl (meth)acrylate, i-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobolonyl (meth)acrylate, dicyclopentanyl (meth)acrylate, dicyclopentenyl (meth)acrylate, dimethylaminoethyl (meth)acrylate, and diethylaminoethyl (meth)acrylate; vinyls having a hydroxyl group, such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; vinyls having an epoxy group, such as glycidyl (meth)acrylate and methyl glycidyl (meth)acrylate; vinyls having an isocyanate group, such as vinyl isocyanate and isopropenyl isocyanate; aromatic vinyls, such as styrene, α-methylstyrene, vinyltoluene, and t-butylstyrene; amides such as acrylamide, methacrylamide, N-methylolmethacrylamide, N-methylolacrylamide, diacetoneacrylamide, and maleic acid amide; vinyl esters, such as vinyl acetate and vinyl propionate; aminoalkyl (meth)acrylates, such as N, N-dimethylaminoethyl (meth)acrylate, N, N-diethylaminoethyl (meth)acrylate, N, N-dimethylaminopropyl (meth)acrylate, N, N-dipropylaminoethyl (meth)acrylate, N, N-dibutylaminoethyl (meth)acrylate, and N, N-dihydroxyethylaminoethyl (meth)acrylate; unsaturated sulfonic acids, such as styrene sulfonic acid, sodium styrene sulfonic acid, 2-acrylamide-2-methylpropane sulfonic acid; and unsaturated phosphoric acids, such as mono(2-methacryloyloxyethyl) acid phosphate and mono(2-acryloyloxyethyl) acid phosphate.

These monomers may be used in combination. In particular, acid anhydrides are preferred, and maleic anhydride is particularly preferred.

The modified propylene resin (P2) can be obtained by various methods as described above. Specific examples of the methods for producing the modified propylene resin (P2) include a method in which a propylene polymer and a monomer having ethylene-based unsaturated carboxylic acid having an unsaturated vinyl group or an unsaturated vinyl group other than an olefin are reacted in an organic solvent in the presence of a polymerization initiator, and then the solvent is removed; a method in which a melt obtained by heating and melting a propylene polymer and the carboxylic acid having an unsaturated vinyl group are reacted while stirring in the presence of a polymerization initiator; and a method in which a mixture of a propylene polymer, a carboxylic acid having an unsaturated vinyl group, and a polymerization initiator is supplied to an extruder and reacted while being heated and kneaded, and then converted into a carboxylate by a method such as neutralization or saponification.

Specific examples of the polymerization initiator include various peroxide compounds such as benzoyl peroxide, dichlorobenzoyl peroxide, dicumyl peroxide, di-tert-butyl peroxide, and 2,5-dimethyl-2,5-di(peroxybenzoate) hexin-3,1,4-bis (tert-butylperoxyisopropyl) benzene. An azo compound such as azobisisobutyronitrile may also be used. These polymerization initiators may be used in combination.

Specific examples of organic solvents include aromatic hydrocarbons such as xylene, toluene, and ethylbenzene; aliphatic hydrocarbons such as hexane, heptane, octane, decane, isooctane, and isodecane; alicyclic hydrocarbons such as cyclohexane, cyclohexene, methylcyclohexane, and ethylcyclohexane; ester solvents such as ethyl acetate, n-butyl acetate, cellosolve acetate, propylene glycol monomethyl ether acetate, propylene glycol monoethyl ether acetate, and 3-methoxybutyl acetate; and ketone solvents such as methyl ethyl ketone and methyl isobutyl ketone. These organic solvents may be used in combination as a mixture. In particular, aromatic hydrocarbons, aliphatic hydrocarbons, and/or alicyclic hydrocarbons are preferred, and aliphatic hydrocarbons and/or alicyclic hydrocarbons are more preferred.

The method for producing the modified propylene resin (P2) by neutralization or saponification is a practically preferable method because it is easy to treat the material of the modified propylene resin (P2) as an aqueous dispersion.

Specific examples of basic substances used for neutralization or saponification of such aqueous dispersions include alkali or alkaline earth metals or other metals such as sodium, potassium, lithium, calcium, magnesium, and zinc; inorganic amines such as hydroxylamine and ammonium hydroxide; organic amines such as ammonia, (tri)methylamine, (tri)ethanolamine, (tri)ethylamine, dimethyl ethanolamine, and morpholine; oxides, hydroxides, or hydrides of alkali or alkaline earth metals or other metals such as sodium oxide and sodium peroxide; and weak acid salts of alkali or alkaline earth metals or other metals such as sodium carbonate. Particularly preferred examples of the carboxylate or carboxylic acid ester neutralized or saponified by the basic substance include alkali metal carboxylates such as sodium carboxylate and potassium carboxylate; and ammonium carboxylate.

The degree of neutralization or saponification, that is, the conversion rate of the carboxylic acid groups of the material of the modified propylene resin (P2) to carboxylates such as metal salt or ammonium salt is usually 50 to 100%, preferably 70 to 100%, and more preferably 85 to 100% from the viewpoint of the stability of the aqueous dispersion and the adhesiveness with the fiber. The carboxylic acid groups in the modified propylene resin (P2) are preferably all neutralized or saponified by a basic substance, but some of the carboxylic acid groups may remain without being neutralized or saponified.

Methods for analyzing the salt components of carboxylic acid groups include, for example, a method for detecting metal species forming the salt by ICP emission spectrometry, and a method for identifying the structure of the acid group salt by IR, NMR, mass spectrometry, or elemental analysis.

The weight average molecular weight (Mw) of the modified propylene resin (P2) is preferably 1,000 to 100,000, more preferably 2,000 to 80,000.

A thermoplastic resin containing a polyamide resin is more likely to improve the adhesiveness particularly to a metal. Any type of polyamide resin may be used, and various types of known polyamide resin can be used. Specific examples of the polyamide resin include polyamide 6, polyamide 12, polyamide 66, polyamide 11, and aromatic polyamides. In particular, polyamide 6 and polyamide 12 are preferred.

The melt flow rate (MFR) of the polyamide resin, measured at 230°C and a load of 2.16 kg according to ASTM D1238 after drying at 80°C for 5 hours, is preferably 40 g/10 min or more, more preferably 40 to 400 g/10 min. A value of the MFR within this range does not excessively lower the fluidity upon addition of the filler (S) described below, and allows the matrix resin (M) to sufficiently impregnate the long carbon fiber (L).

The weight average molecular weight (Mw) of the polyamide resin is preferably 5,000 to 50,000, more preferably 5,000 to 30,000.

### Filler (S)

The aspect ratio of the filler (S) used in the present invention is 5.0 to 500, preferably 5.0 to 200, and more preferably 5.0 to 100. An aspect ratio within this range tends to significantly improve the vibration fatigue properties.

Though not clear as described above why the vibration fatigue properties are significantly improved, the reason can be deduced as follows. A filler (S) having an aspect ratio within this specific range tends to be oriented along the same direction as the fiber of the long carbon fiber (L), and as a result, the strength-enhancing effect by the filler (S) increases more notably.

In addition, when the thermoplastic resin includes the modified propylene resin (P2) described above, the vibration fatigue properties are also significantly improved as compared with the case where a filler having a small aspect ratio is used. The additional reason for this case can be deduced as follows. In general, the acid in the modified propylene resin (P2) may be consumed by the filler, but as described above, an aspect ratio of the filler (S) within this specific range improves the vibration fatigue properties and thus can relatively reduce the amount of the filler. The amount of acid consumed by the filler is thus reduced, thereby reducing the decrease in interfacial bonding between the matrix resin and long carbon fiber (L) due to acid consumption.

Any type of filler (S) may be used. Specific examples of the filler (S) include short carbon fibers, short glass fibers, carbon nanotubes, wollastonite, sepiolite, mica, basic magnesium sulfate, montmorillonite, basalt fiber, and total aromatic polyamide. In particular, from the viewpoint of improving strength, at least one type of fiber selected from the group consisting of short carbon fibers and short glass fibers is preferred.

The length of the filler (S) is preferably 0.01 to 10 mm, more preferably 0.03 to 5 mm. When the length is equals to or less than the upper limit of these ranges, for example, the filler (S) can easily enter between the long carbon fibers (L), which tends to develop more satisfactory physical properties such as vibration fatigue properties and elastic modulus. In addition, when the length is equals to or more than the lower limit of these ranges, for example, physical properties such as vibration fatigue properties and elastic modulus tend to increase.

### Unidirectional Fiber Reinforced Resin Sheet

A unidirectional fiber reinforced resin sheet of the present invention contains the long carbon fibers (L) described above, a thermoplastic resin, and a filler (S). The long carbon fibers (L) are oriented in one direction in the sheet.

The content of the fillers (S) in the total mass (100 mass%) of the unidirectional fiber reinforced resin sheet is preferably 0.1 to 40.0 mass%, more preferably 0.5 to 20.0 mass%, particularly preferably 0.5 to 10.0 mass%, and most preferably 0.5 to 5.0 mass%. When the content is within these ranges, modification of the matrix resin (M) to further improve the vibration fatigue properties is possible while maintaining the impregnation property of the matrix resin (M) to the long carbon fiber (L). The method for measuring the content is as described in the Examples below.

The content of the long carbon fiber (L) in the total mass (100 mass%) of the unidirectional fiber reinforced resin sheet is preferably 20 to 80 mass%, more preferably 30 to 75 mass%. The content of the thermoplastic resin is preferably 35 to 70 mass%, more preferably 40 to 65 mass%. In addition, the fiber volume content (vf) of the long carbon fibers (L) in the unidirectional fiber reinforced resin sheet is preferably 10 to 70%, more preferably 15 to 60%.

The thickness of the unidirectional fiber reinforced resin sheet is preferably 1 to 500 µm, more preferably 5 to 400 µm, and particularly preferably 5 to 300 µm.

The unidirectional fiber reinforced resin sheet of the present invention may be produced by any method. For example, the unidirectional fiber reinforced resin sheet can be obtained by preparing a mixture of the matrix resin (M) and the filler (S) in advance, and aligning an opened carbon fiber bundle (a bundle of long carbon fibers (L)) in one direction and bringing the bundle into contact with the molten mixture.

Single unidirectional fiber reinforced resin sheet of the present invention may be used as it is, or a plurality of unidirectional fiber reinforced resin sheets may be included in a laminate for use. In particular, a laminate that includes a plurality of unidirectional fiber reinforced resin sheets of the present invention is preferred for the use. The sheet(s) may be appropriately cut into a tape shape for use.

The unidirectional fiber reinforced resin sheet of the present invention is also preferably used in the form of a composite or a laminate with another material. In particular, the unidirectional fiber reinforced resin sheet is useful as a reinforcing material for other structural materials, especially for components of vehicles and aircraft that continuously generate vibrations.

The unidirectional fiber reinforced resin sheet of the present invention is not limited to the above applications, and can be used for a variety of applications. Specifically, the unidirectional fiber reinforced resin sheet can be used for the following applications: part members for general flying objects such as aircraft and helicopters, for example, primary structural materials such as main wings, vertical stabilizers, and horizontal stabilizers, secondary structural materials such as ailerons, rudders, and elevators, interior materials such as seats and tables, power units, hydraulic cylinders, and composite brakes; part members for rockets, such as nozzle cones and motor cases; part members for artificial satellites such as antennas, structures, solar panels, battery cases, and telescopes; part members for machines, such as frames, shafts, rollers, leaf springs, machine tool heads, robot arms, transport hands, and synthetic fiber pots; part members for high-speed rotating bodies, such as centrifuge rotors and uranium enrichment cylinders; electronic part members, such as parabolic antennas, battery parts, radars, acoustic speaker cones, computer parts, printer parts, personal computer housings, and tablet housings; part members for automobiles and motorcycles, such as frame parts, semi-structural parts, outer panel parts, interior and exterior parts, power units, other equipment-hydraulic cylinders, brakes, battery cases, drive shafts, engine parts, spoilers, racing car bodies, crash cones, chairs, tablets, telephone covers, undercovers, side covers, transmission covers, battery trays, rear steps, spare tire containers, bus body walls, and truck body walls; part members for train cars and vehicles, such as interior materials, floor panels, ceiling panels, linear motor car bodies, Shinkansen (super express) and railway bodies, window wipers, bogies, and seats; hulls of ships such as yachts, cruisers and boats; part members for ships, such as masts, rudders, propellers, hard sails, screws, military fuselages, submarine fuselages, and deep sea exploration ships; part members for pressure vessels, such as actuators, cylinders, tanks, hydrogen tanks, CNG tanks, and oxygen tanks; part members for scientific equipment, such as stirring blades, pipes, tanks, pit floors, and plant piping; part members for wind power generation, such as blades, skins, skeletal structures, and deicing systems; part members and supplies for medical and nursing equipment, such as X-ray diagnostic equipment, wheelchairs, artificial bones, artificial legs and hands, crutches, nursing care aids and robots (power assist suits), walking machines, and nursing care beds; part members for infrastructure and civil engineering and construction, such as CF composite cables, concrete reinforcements, guardrails, bridges, tunnel walls, hoods, cables, tension rods, strand rods, and flexible pipes; part members for submarine oil field mining, such as marine risers, flexible jumpers, flexible risers, and drilling risers; sports and leisure goods such as fishing rods, reels, golf clubs, tennis rackets, badminton rackets, ski plates, stocks, snowboards, ice hockey sticks, snowmobiles, bows, kendo bamboo swords, baseball bats, swim plungers, sporting goods for the disabled, and sports helmet; bicycle parts such as frames, disc wheels, rims, handles, and saddles; livingware such as eyeglasses, bags, umbrellas, and ballpoint pens; and part members and supplies for other industrial applications, such as plastic pallets, containers, logistics materials, resin molds, furniture, helmets, pipes, scaffolding boards, safety boots, protectors, fuel cell covers, drone blades, jigs, and jig frames.

A member for an automobile of the present invention includes the unidirectional fiber reinforced resin sheet of the present invention as described above. Examples of the member for an automobile include frame parts, semi-structural parts, outer panel parts, interior and exterior parts, power units, other equipment-hydraulic cylinders, brakes, battery cases, drive shafts, engine parts, spoilers, racing car bodies, crash cones, chairs, tablets, telephone covers, undercovers, side covers, transmission covers, battery trays, rear steps, spare tire containers, bus body walls, and truck body walls, as described above.

### Examples

Hereinafter, the present invention will be described in more detail with reference to the Examples.

In the Example, the aspect ratio, length and content of a filler (S), and the physical properties of a propylene resin are measured by the following methods.

### 1. Measurement of Aspect Ratio and Length of Filler (S) in Unidirectional Fiber Reinforced Resin Sheet

A filler (S) was heated in an electric furnace (500°C, atmospheric atmosphere) for 30 minutes, and then allowed to pass through a sieve with a 600 µm mesh opening to remove long carbon fibers (L). The sieved material was added to a dispersant and subjected to an ultrasonic dispersion treatment for 5 minutes. By using a particle size and shape analyzer (device name: PITA3, manufactured by Seishin Enterprise Co., Ltd.), dynamic image analysis was performed under the conditions of 5,000 observed particles, a flow rate of 500 µl/sec, and an observation magnification of 4 times to obtain the aspect ratio and the length (the obtained aspect ratio and length are average values). The dispersion medium used may be of any type that can be subjected to the dynamic image analysis, and a 0.05 mass% aqueous solution of a surfactant was used in the present example.

### 2. Measurement of Content of Filler (S) in Unidirectional Fiber Reinforced Resin Sheet

The volume fraction was calculated by computed tomography (CT) to determine the content of the filler (S). Specifically, a high-resolution 3DX X-ray microscope (device name nano3DX, manufactured by Rigaku Corporation) was used, and the measurement was performed under the following conditions.
Lens used: 0540
Scanning method: Step scan 1000 points

### 3. The physical properties of a propylene resin-weight average molecular weight, copolymerization composition, maleic anhydride content, melting point, and adhesion amount to the carbon fiber bundle-were measured by the method described in WO2017/183672.

### Example 1

### Preparation of Long Carbon Fiber (L)

A carbon fiber bundle (product name: PYROFIL TR50S12L, number of filaments 24,000, strand strength of 5,000 MPa and strand modulus of 242 GPa, manufactured by Mitsubishi Chemical Corporation) was immersed in acetone and subjected to ultrasonic waves for 10 minutes. After that, the carbon fiber bundle was pulled out and washed three times with acetone, and then dried at room temperature for 8 hours to remove the adhering sizing agent.

### Production of Emulsion

Mixed were 100 parts by mass of propylene/butene copolymer having a Shore D hardness of 52 and a weight average molecular weight Mw measured by GPC of 350,000, 10 parts by mass of maleic anhydride-modified propylene polymer having Mw of 20,000, an acid value of 45 mg-KOH/g, maleic anhydride content of 4 mass%, and a melting point 140°C, and 3 parts by mass of potassium oleate as a surfactant. The mixture was fed from the hopper of a twin-screw extruder (device name PCM-30, L/D = 40, manufactured by Ikegai Corp) at a rate of 3,000 g/hour, and 20% aqueous solution of potassium hydroxide was continuously fed at a rate of 90 g/hour from a feed port provided in the vent section of the extruder. The mixture was continuously extruded at a heating temperature of 210°C. The extruded resin mixture was cooled to 110°C by using a static mixer with a jacket installed at the mouth of the extruder, and further fed into 80°C warm water to obtain an emulsion. The solid content concentration of the obtained emulsion was 45%.

The above-described maleic anhydride-modified propylene resin is a modified resin obtained by mixing 96 parts by mass of propylene/butene copolymer, 4 parts by mass of maleic anhydride, and 0.4 parts by mass of polymerization initiator (product name: Perhexyne 25B, manufactured by NOF CORPORATION), and subjecting the mixture to the modification at a heating temperature of 160°C for 2 hours.

### Production of Carbon Fiber Bundle

The emulsion obtained as described above was allowed to adhere to the long carbon fibers (which were obtained by removing the sizing agent from the carbon fiber bundle manufactured by Mitsubishi Chemical Corporation) by a roller impregnation method. The long carbon fibers were then dried online at 130°C for 2 minutes to remove the low boiling point components to obtain a carbon fiber bundle. The adhesion amount of the emulsion was 0.87 mass%.

### Preparation of Mixture of Filler (S) and Thermoplastic Resin

The mixture of a filler (S) and a thermoplastic resin was obtained by melting and kneading at 180°C the following: 1) as a filler (S), 10 parts by mass of short carbon fibers (S-1) having an aspect ratio of 12.8 and a fiber length of 56.5 µm, 2) as a propylene resin (PI), 88.5 parts by mass of unmodified propylene resin (Moplen (registered trademark) HP500W, manufactured by LyondellBasell) having a MFR (ASTM D1238, 230°C, 2.16 kg) of 150 g/10 min, and 3) as propylene resin (P2), 1.5 parts by mass of a modified polypropylene grafted with 0.5 mass% maleic anhydride and having a MFR (230°C, 2.16 kg) of 9.1 g/10 min.

### Production of Unidirectional Fiber Reinforced Resin Sheet

A unidirectional fiber reinforced resin sheet was obtained by aligning the opened carbon fiber bundle (long carbon fibers (L-1)), bringing the carbon fiber bundle into contact with the molten mixture of the filler (S) and the thermoplastic resin coated on a impregnation roll, and pulling the carbon fiber bundle off. During the procedure, the temperature of the extruder and the T-die was set to 260°C, and the temperature of the impregnation roll was also set to 260°C. As for the device and procedure, the same device and procedure as those illustrated in FIG. 1 of Japanese Patent No. 4522498 were used.

The unidirectional fiber reinforced resin sheet had the following content of the components: 56 mass% of the long carbon fiber (L), 4.4 mass% of the filler (S), and 39.6 mass% of the thermoplastic resin. The fiber volume content (vf) of the long carbon fibers (L) was 39%, and the thickness of the unidirectional fiber reinforced resin sheet was 200 µm. The long carbon fiber (L) had a fiber length of 20 mm or more and an aspect ratio of more than 500. The content of the filler (S) and the thermoplastic resin can be adjusted by appropriately changing the degree of opening of the long carbon fibers (L) and the contact time with the impregnation roll. The thickness of the unidirectional fiber reinforced resin sheet can be adjusted by appropriately changing the extrusion amount.

### Example 2

A unidirectional fiber reinforced resin sheet was produced in the same manner as in Example 1 except that a resin composition (Prime Polypro (registered trademark) E7000, manufactured by Prime Polymer Co., Ltd.), which has glass fiber content (ISO 3451-1) of 30 mass% and a MFR (JIS K7210: 99, 230°C, 2.16 kg) of 5 g/10 min, and which contains short glass fibers (S-2) having an aspect ratio of 9.4, was used in place of 10 parts by mass of short carbon fibers (S-1), and the content of each component was changed to the content shown in Table 1. The thickness of the unidirectional fiber reinforced resin sheet was 200 µm.The long carbon fiber (L) had a fiber length of 20 mm or more and an aspect ratio of more than 500.

### Comparative Example 1

A unidirectional fiber reinforced resin sheet was produced in the same manner as in Example 1 except that the filler (S) was not used, and the content of each component was changed to the content shown in Table 1.

### Comparative Example 2

A unidirectional fiber reinforced resin sheet was produced in the same manner as in Example 1 except that talc (S-3) (HI-FILLER (registered trademark) #5000PJ, manufactured by Matsumura Sangyo Co., Ltd.) having aspect ratio of 1.8, was used in place of 10 parts by mass of short carbon fibers (S-1), and the content of each component was changed to the content shown in Table 1.

The following vibration fatigue test was performed on the unidirectional fiber reinforced resin sheets obtained in the above Examples and Comparative Examples. Table 1 shows the results.

### Vibration Fatigue Test

Ten unidirectional fiber reinforced resin sheets were stacked in such a way that the fiber direction of the long carbon fibers (L) of a sheet deviates by ±45° direction from that of the adjacent sheet. The stacked unidirectional fiber reinforced resin sheets were then held between two brass plates, preheated at 180°C for 4 minutes, pressurized at 180°C and pressure of 6 MPa for 3 minutes, and cooled at the same 6 MPa for 1 minute to obtain a laminate.

The resulting laminate was cut to obtain a test piece in accordance with ASTM D671-TypeA. Vibration fatigue tests were performed by using a repeated vibration fatigue tester (B50 type, manufactured by Toyo Seiki Seisaku-sho, Ltd.) under the conditions of room temperature, frequency of 30 Hz, and pressure of 60 MPa, and the vibration fatigue properties were evaluated by the number of repetitions when the displacement reached 8 mm.

**Table 1**

| | | | Ex. 1 | Ex. 2 | Comp. Ex. 1 | Comp. Ex. 2 |
|---|---|---|---|---|---|---|
| Composition | Filler (S) | Type | S-1 | S-2 | - | S-3 |
| | | Aspect ratio | 12.8 | 9.4 | - | 1.8 |
| | | Length (µm) | 56.5 | 51.2 | - | 7.7 |
| | | Content (mass%) | 4.4 | 0.9 | - | 12.9 |
| | Thermoplastic resin | Content (mass%) | 39.6 | 43.1 | 43 | 30.1 |
| | Long carbon fiber (L) | Content (mass%) | 56 | 56 | 57 | 57 |
| | | Fiber volume content (vf) (%) | (39) | (39) | (40) | (40) |
| Physical properties | Vibration fatigue test (60 Mpa) (times) | | 87,500 | 79,800 | 28,900 | 5,800 |

In Table 1, each content of the short carbon fiber (S-1) in Example 1 and the short glass fiber (S-2) in Example 2 is the content of the filler (S) in the unidirectional fiber reinforced resin sheet measured by the method described in the item 2 above. On the other hand, the content of the talc (S-3) in Comparative Example 2 was difficult to measure by the method described in the item 2, so the content was calculated from the amount of the talc (S-3) added during the production.

### Evaluation

The results shown in Table 1 obviously show that the vibration fatigue properties were excellent in Examples 1 and 2 because the short carbon fiber (S-1) or the short glass fiber (S-2)-both having a specific aspect ratio-were used as the filler (S).

On the other hand, the filler (S) was not used in Comparative Example 1, thus the vibration fatigue properties were inferior. In Comparative Example 2, the talc (S-3) having a small aspect ratio was used as the filler (S), thus vibration fatigue properties were also inferior.

### Industrial Applicability

The unidirectional fiber reinforced resin sheets of the present invention and the laminate thereof have excellent vibration fatigue properties, and thus can be used for various applications. In particular, the sheet and the laminate are suitable for the application such as a reinforcing member for vehicle parts such as automobiles and trains, and as parts for flying objects such as aircraft.

## Claims

1. A unidirectional fiber reinforced resin sheet, comprising:
a long carbon fiber (L) which is oriented in one direction and has a fiber length of 20 mm or more;
a thermoplastic resin; and
a filler (S) having an aspect ratio of 5.0 to 500.

2. The unidirectional fiber reinforced resin sheet according to claim 1, wherein:
the filler (S) has a length of 0.01 to 10 mm.

3. The unidirectional fiber reinforced resin sheet according to claim 1, wherein:
the filler (S) is at least one type of fiber selected from the group consisting of short carbon fibers and short glass fibers.

4. The unidirectional fiber reinforced resin sheet according to claim 1, wherein:
a content of the filler (S) is 0.1 to 40.0 mass% in a total mass of 100 mass% of the unidirectional fiber reinforced resin sheet.

5. The unidirectional fiber reinforced resin sheet according to claim 1, wherein:
the thermoplastic resin includes an unmodified propylene resin (P1) having a melt flow rate of 100 g/10 min or more measured at 230°C and a load of 2.16 kg according to ASTM D1238.

6. The unidirectional fiber reinforced resin sheet according to claim 1, wherein:
the thermoplastic resin includes a modified propylene resin (P2) having at least a carboxylate bonded to a polymer chain of the modified propylene resin (P2).

7. The unidirectional fiber reinforced resin sheet according to claim 1, wherein:
the thermoplastic resin includes a polyamide resin having a melt flow rate of 40 g/10 min or more measured at 230°C and a load of 2.16 kg according to ASTM D1238 after drying at 80°C for 5 hours.

8. A laminate, comprising:
a plurality of the unidirectional fiber reinforced resin sheets according to claim 1.

9. A member for an automobile, the member comprising:
the unidirectional fiber reinforced resin sheet according to claim 1.
